Europäisches Patentamt

European Patent Office

Office européen des brevets

(11) Publication number: **0 585 938 A1**

# EUROPEAN PATENT APPLICATION

(21) Application number: **93114139.4**

(22) Date of filing: **03.09.93**

(51) Int. Cl.5: **C09K 3/24**, F25C 3/04

(30) Priority: **04.09.92 JP 263276/92**

(43) Date of publication of application:
**09.03.94 Bulletin 94/10**

(84) Designated Contracting States:
**BE CH DE FR GB IT LI NL SE**

(71) Applicant: **SANYO CHEMICAL INDUSTRIES, Ltd.**
**No.11-1, Ichinohashi-nomoto-cho**
**Higashiyama-ku**
**Kyoto-shi Kyoto-fu, 605(JP)**

(72) Inventor: **Sakakibara, Megumu, Sanyo Kasei**
**Higashiyama-ryo**
**4-18, Imagumanominamidani-cho,**
**Higashiyama-ku**
**Kyoto-shi,Kyoto-fu 605(JP)**
Inventor: **Fujiura, Yoji**
**7-3, Takehana Nishinokuchi-cho,**
**Yamashina-ku**
**Kyoto-shi, Kyoto-fu 607(JP)**

(74) Representative: **VOSSIUS & PARTNER**
**Siebertstrasse 4**
**D-81675 München (DE)**

(54) **Artificial snow and method for producing the same.**

(57) This invention relates to artificial snow comprising water-absorbent resin, inorganic powder, surfactant, and ice, as well as a production method thereof comprising ① a process for mixing water-absorbent resin, inoganic powder, surfactant, and water, and ② a process for freezing the mixture obtained in process ①. The artificial snow obtained by the present invention provides good quality snow suitable for skiing, and the production method requires no complicated manufacturing process.

Rank Xerox (UK) Business Services
(3.10/3.09/3.3.4)

This invention relates to artificial snow useful for artificial ski grounds, and its production method.

Conventionally, the following types of artificial snow are generally known.

① Artificial snow produced by artificial snow blowing machines

Examples of artificial snow blowing machines include fan types and gun types, all of which spray water into an atmosphere below 0°C and freeze water droplets using cold air.

② Artificial snow produced by crushing ice

Ice lumps are crushed into small particles.

③ Artificial snow using water-absorbent resin

Water-absorbent resin is blended with water and frozen after aeration (JP-A- . 500526/1988); water-absorbed gel is crushed by expanding force during moisture freezing (JP-A- 500663/1991); water-absorbent resin or water-absorbed gel is mixed with natural snow or ice and snow, and is frozen (JP-A- 229761/1991); and water-absorbed gel is frozen using a refrigerant such as dry ice (JP-A- 43284/1992).

However, these conventional artificial snow have problems, as described below:

Artificial snow produced by artificial snow blowing machines specified in Item ①: Frequently this snow is wet or sleet-like containing a large amount of moisture which is not suitable for skiers from the viewpoint of snow quality. It also has a defect in that the snow making capacity greatly depends on temperature and humidity.

Artificial snow produced by crushing ice specified in Item ②: In general, snow produced is frequently granular snow which has a larger particle size than that of natural snow, and is not suitable for skiers from the viewpoint of snow quality.

Artificial snow using water-absorbent resin specified in Item ③: Artificial snow produced by mixing water-absorbent resin with water, followed by aeration and freezing (JP-A-500526/1988) or by crushing water-absorbed gel by expansion force during moisture freezing (JP-A- 500663/1991) both produce fine ice-like snow or form a layer of ice on the snow (icy snow), and are initially not suitable for skiing, requiring operation to further crush the artificial snow surface into finer particles by a snow surface maintenance machine and the like (grooming), producing problems in operability. Artificial snow produced by freezing a mixed water-absorbent resin or water-absorbed gel with natural snow or ice and snow (JP-A-229761/1991) requires a complicated process to be used in conjunction with natural snow, and in particular, at indoor skiing grounds, natural snow must be brought in, producing a problem of cost. Artificial snow produced by freezing water-absorbed gel using a refrigerant such as dry ice (JP-A-43284/1992) requires a troublesome production process such as mixing water-absorbed gel with a refrigerant such as dry ice; this also produces a problem of cost.

It is an object of the present invention to provide artificial snow of excellent quality for skiing.

It is an another object of the present invention to provide artificial snow which is dry and does not form large blocks of ice even after freezing.

It is still another object of the present invention to provide a simple and economical process for producing artificial snow.

The present invention relates to artificial snow comprising water-absorbent resin, inorganic powder, surfactant and ice, as well as a production method for artificial snow comprising ① a process for mixing water-absorbent resin, inorganic powder, surfactant and water and ② a process for freezing the mixture thereof.

According to the invention, the water-absorbent resin may be composed of ① resins obtainable by polymerizing (a) starch or cellulose, (b) a water-soluble monomer having a carboxyl group, a carboxylate group, carboxylic anhydride, a sulfonic acid group, a sulfonate group or a sulfonic acid ester group, and/or a monomer capable of becoming water-soluble through hydrolysis and (c) a crosslinking agent and optionally subsequently carrying out hydrolysis.

Details of the components (a), (b) and (c) used for producing the water-absorbent resins noted above and the proportions of the components (a), (b) and (c), their method of production and specific examples of the water-insoluble water-absorbing resins, are described in Japanese Patent Application Laid-Open No. 25886/1977 and Japanese Patent Publication No. 46199/1978, No. 46200/1978 and No. 21041/1980.

Examples of (a) include raw starches such as sweet potato starch, potato starch, wheat starch, corn starch, rice starch, and tapioca starch; processed starch such as oxidized starch, dialdehyde starch, alkyl etherized starch, oxy alkylated starch, amino ethyl etherized starch, and cyano ethyletherized starch; and celluloses such as natural cellulose, carboxymethyl cellulose, and cellulose ether.

Examples of (b) include monomers possessing a carboxy group such as (meth)acrylic acid and maleic anhydride; monomers possessing a carboxylate group such as sodium (meth)acrylate, sodium maleate, trimethylamine salt of (meth)acrylic acid, and triethanol amine salt of (meth)acrylic acid; monomers possessing a sulfonic acid group such as vinyl sulfonic acid, vinyl toluene sulfonic acid and sulfopropyl (meth)acrylate; and monomers possessing a sulfonate group such as sodium vinyl sulfonate, methyl amine salt of vinyl sulfonic acid, and sulfopropyl diethanol amine salt of (meth)acrylic acid.

Examples of (c) include polyols such as ethylene glycol and trimethylol propane; bisacrylamides such as N,N-methylene-bisacrylamide; multifunctional (meth)acrylic esters such as ethylene diglycol di(meth)-acrylate, polyethylene glycol di(meth)acrylate, and trimethylol propane tri(meth)acrylate; methylol (meth)-acrylamide, and glyoxal, etc.

In the description herein, "(meth)acrylic-" means "acrylic-" or "methacrylic-".

Examples of the water-absorbent resin other than those noted above, are ② those obtainable by polymerizing the components (a) and (b), e.g., hydrolyzed product of starch-acrylonitrile graft copolymer or hydrolyzed product of cellulose-acrylonitrile graft copolymer; ③ crosslinked material of (a) (e.g., crosslinked carboxymethylcellulose); ④ a copolymer of the components (b) and (c) (e.g., partially hydrolyzed product of crosslinked polyacrylamide, crosslinked acrylic acid-acrylamide copolymer, crosslinked sulfonated polystyrene, saponified vinylester-unsaturated carboxylic acid copolymer disclosed in Japanese Patent Application Laid-Open No. 14689/1977 and No. 27455/1977, crosslinked polyacrylic acid or salts thereof (e.g., alkali metal salts, ammonium salts, etc.), crosslinked acrylic acid-acrylic acid ester copolymer, crosslinked isobutylene-maleic acid anhydride copolymer and crosslinked carboxylic acid denatured polyvinyl alcohol etc.); and ⑤ self-crosslinking polymerization product of the component (b) (e.g., self-crosslinkable polyacrylic acid salts such as alkali metal salts, ammonium salts, etc.). These water-absorbent resins may be used alone or in combinations of two or more.

Among the above examples of water-absorbent resins, ① and some of ④ such as the crosslinked acrylic acid-acrylamide copolymer and crosslinked polyacrylic acid or salts thereof (e.g., alkali metal salts, ammonium salts, etc.) are preferable.

The preferable water-absorbent resins mentioned above are those having a water absorption capability with respect to pure water of at least 50 ml/g, preferably 100 to 1,000 ml/g.

It is desirable that the vicinity of the surface of the said water-absorbent resin is crosslinked (surface-crosslinked) by a crosslinking agent to improve the quality of the artificial snow of the present invention. Examples of the crosslinking agent used in the present invention include compounds with two or more functional groups which can react with groups such as carboxyl, sulfonic acid, hydroxyl, and amino; these can be used freely without any particular restriction.

Specific examples of the said crosslinking agent include the following:

① Polyvalent metal salts or their hydroxides

For polyvalent metal, examples include bivalent metals of Mg, Ca, Ba, Zn, and Fe and trivalent metals of Al and Fe; inorganic normal salts or double salts such as halide, nitrate, phosphate, sulfate, and carbonate of these metals, or lower organic acid salts of oxalate and acetate, or hydroxide; for specific compounds, calcium chloride, magnesium chloride, ferrous chloride, aluminum chloride, aluminum polychloride, ferric chloride, iron nitrate, calcium nitrate, aluminum nitrate, magnesium phosphate, calcium phosphate, magnesium sulfate, ferrous sulfate, aluminum sulfate, aluminum sodium sulfate, aluminum potassium sulfate, aluminum ammonium sulfate, calcium carbonate, magnesium carbonate, magnesium calcium carbonate, magnesium oxalate, calcium oxalate, magnesium acetate, calcium acetate, aluminum acetate, calcium hydroxide, aluminum hydroxide and the like.

② Polyglycidylether compounds

Ethylene glycol diglycidyl ether, propylene glycol diglycidyl ether, glycerol-1,3-diglycidyl ether, polyethylene glycol diglycidyl ether, polypropylene glycol diglycidyl ether, polyglycerol-1,3-diglycidyl ether, glycerol triglycidyl ether, trimethylol propane triglycidyl ether and the like.

③ Haloepoxy compounds

Examples of specific compounds include epichlorohydrin, epibromohydrin, $\alpha$-methylepichlorohydrin and the like.

④ Aldehyde compounds

Glutaraldehyde, glyoxal and the like.

⑤ Isocyanate compounds

2,4-tolylene diisocyanate, hexamethylene diisocyanate, and derivatives thereof

⑥ Polyhydric alcohols

Ethylene glycol, propylene glycol, glycerine, polyethylene glycol, polypropylene glycol and the like.

⑦ Polyamine compounds

Ethylene diamine, diethylene triamine, triethylenetetramaine, polyethylene imine, polyamidepolyamine epichlorohydrin resin and the like.

⑧ Polycarboxylic acid compounds

Maleic acid, phthalic acid and the like.

⑨ Crosslinking agents other than items ①-⑧

Polyoxazoline compounds, polyaziridine compounds and the like.

These crosslinking agents may be used alone or in combinations of two or more. Of these, preferable choices are ② polyglycidylether compounds, ⑥ polyhydric alcohols, and ⑦ polyamine compounds.

The amount of crosslinking agents used in the present invention varies according to the type of crosslinking agents, the type of water-absorbent resin, the type and the amount of inorganic powder, the type and the amount of surfactant, and the desired quality of artificial snow, but it is usually in the range of 0.0001-10% based on the weight of water-absorbent resin, preferably 0.01-3%. When the amount of crosslinking agent is more than 10 wt%, the degree of crosslinking becomes excessively high and water-absorbing capacity is reduced. On the other hand, when it is less than 0.0001 wt%, crosslinking effects are scarcely obtained and the improvement effects of artificial snow quality become insufficient.

In the present invention, as a method of crosslinking the surface of the water-absorbent resin, a method exists to add and mix crosslinking agents in an undiluted solution or powder form to water-absorbent resin to enable crosslinking reactions to take place; there are also methods to: add and mix the solution mixture of crosslinking agents with water and/or hydrophilic organic solvent to water-absorbent resin to enable crosslinking reactions to take place; add and mix crosslinking solvent in an undiluted solution or powder form to water-absorbent resin dispersed and suspended in the organic solvent to enable crosslinking reactions to take place; add solution mixture of crosslinking agents with water and/or hydrophilic organic solvent to water-absorbent resin to enable crosslinking reactions to take place; disperse water-absorbent resin in the solution mixture of water and hydrophilic organic solvent and to add and mix crosslinking agents in an undiluted solution or powder form to enable crosslinking reactions to take place; and disperse water-absorbent resin in the solution mixture of water and hydrophilic organic solvent and to add and mix the solution mixture of crosslinking agents with water and/or hydrophilic organic solvent to enable crosslinking reactions to take place.

Of the methods to crosslink the surface of the water-absorbent resin with the above crosslinking agents, a method to add and mix a solution mixture of crosslinking agents with water to enable crosslinking reactions to take place is preferable. In this case, it is preferable to allow the following water-soluble compounds to exist in the solution mixture of crosslinking agents with water to achieve more efficient and uniform crosslinking in the vicinity of the surface of water-absorbent resin.

The above-mentioned water-soluble compound is at least one of a water-soluble compound selected from the group consisting of alkylene oxide addition products of monohydric alcohol, monovalent salts of organic acid, and lactams.

The concentration of the solution of the above mentioned water-soluble compound can be varied depending on the type of water-soluble compounds used but it is generally in the range of 2-60 wt%, preferably 5-50 wt%. When the concentration is less than 2 wt%, it becomes difficult to be uniformly crosslinked in the vicinity of the surface of water absorbent resin, while if it exceeds 60 wt%, a large volume of aqueous solution of water-soluble compound is required to secure the water content necessary for crosslinking reactions between water-absorbent resin and crosslinking agents, resulting in poor economy.

It is possible to allow crosslinking reactions to take place by heating as required the mixture of water-absorbent resin and crosslinking agents. Heated temperature varies in accordance with the type of water-absorbent resin and crosslinking agent, but is generally in the range of 20-250°C, preferably 30-200 °C. When heated temperature exceeds 250 °C, water-absorbing capacity decreases or coloring occurs, which is not desirable.

In the present invention, there is no limitation to the equipment for surface-crosslinking of the water-absorbent resin with crosslinking agents, and regular stirrers and mixers or heating furnaces and drying machines, etc. can be used.

In the present invention, any inorganic powder which provides effects for preventing bonding (fusion) between water-absorbent gel particles is acceptable, and the powder which strongly promotes coverage of the surface of water-absorbent resin is particularly preferable.

The particle size of the above inorganic powder varies depending on the particle size of water-absorbent resin and water-absorbed gel, desired quality of artificial snow, and facility of bonding between water-absorbed gel particles, but is generally in the range of 0.0001-20 $\mu$m on average, preferably 0.001-1$\mu$m. If the particle size of inorganic powder becomes smaller than 0.0001$\mu$m, it is too fine to handle. If it exceeds 20$\mu$m, the surface area of inorganic powder becomes excessively small, lowering adhesion to the water-absorbent resin surface, and thus is not desirable.

Specific examples of inorganic powder include silicon dioxide powders such as ultra fine particulate silica, colloidal silica, white carbon and the like, alumina powder, and titanium dioxide powder and the like. These inorganic powders have no particular limitation to the crystal form and moisture content. The inorganic powders specified above may be used in two or more types together. Of the above, the most preferable kind is ultra fine particulate silica.

The quantity of inorganic powder used in the present invention may vary depending on the type of water-absorbent resin, weight ratio of ice to water-absorbent resin, and desired quality of artificial snow, but is generally in the range of 0.01-10 wt% based on the weight of water-absorbent resin, preferably 0.05-3 wt%. When the quantity of inorganic powder is less than 0.01 wt% based on the weight of water-absorbent resin, water-absorbed gel particles bond together to form lumps. If inorganic powder is used in a quantity exceeding 10 wt%, the effects for preventing bonding between water-absorbed gels are not significantly improved; and this is not desirable from the viewpoint of economy.

For the surfactant used in the present invention, any surfactant which provides effects for preventing bonding between water-absorbent gel particles is acceptable, and nonionic, cationic, anionic, and amphoteric surfactants can be used. Examples of these surfactants include those given in "New Introduction to Surfactants" (Takehiko Fujimoto, December 1, 1973, published by Sanyo Chemical Industries, Ltd.), "New Surfactants" (Hiroshi Horiguchi, October 10, 1975, published by Sankyo Shuppan), and "Additives to Petrochemical Products" (Toshio Sakurai, August 10, 1974, published by Saiwai Shobo). Two or more types of these surfactants may be used together.

Of the surfactants, the most preferable type is a nonionic surfactant, and examples include alkanolamide (for example, diethanolamide laurate, coconut oil fatty acid diethanolamide, monoethanolamide stearate, coconut oil fatty acid monoethanolamide and the like), polyoxy alkylene alkyl aryl ether (for example, polyoxy ethylene nonyl phenyl ether, polyoxy ethylene octyl phenyl ether and the like), polyoxyalkylene alkyl ether (for example, polyoxyethylene oleyl cetyl ether and the like), polyoxyalkylene fatty acid ester (for example, polyethylene glycol monostearate, polyethylene glycol monooleate, polyethylene glycol distearate, polyethlyene glycol dioleate and the like), polyoxyalkylene sorbitan fatty acid ester (for example, polyoxyethylene sorbitan monolaurate, polyoxyethylene sorbitan monostearate, polyoxyethylene sorbitan monooleate and the like), sorbitan fatty acid ester (for example, sorbitan monolaurate, sorbitan monostearate, sorbitan monooleate and the like),and polyoxyethylene-polyoxypropylene-block copolymer.

The quantity of surfactant used in the present invention may vary depending on the type of water-absorbent resin, weight ratio of ice to water-absorbent resin, and desired quality of artificial snow, but is generally in the range of 0.01-20 wt% based on the weight of water-absorbent resin, preferably 0.05-10 wt%. When the quantity of surfactant is less than 0.01 wt% based on the weight of water-absorbent resin, water-absorbed gel particles bond together to form lumps. If surfactant is used in a quantity exceeding 20 wt%, the effects for preventing bonding between water-absorbed gels are not significantly improved, and this is not desirable from the viewpoint of economy.

The quantity of water consumed in the present invention may vary depending on the type of water-absorbent resin, the kind of inorganic powder, the kind of surfactant and desired quality of artificial snow, but is generally in the range of 3-200 times the weight of water-absorbent resin, preferably 10-100 times. When the quantity of water is less than 3 times the weight of water-absorbent resin, it becomes difficult to maintain snow quality suitable for skiing, while if it exceeds 200 times, bonding between water-absorbed gels is strengthened, an undesirable effect.

With the present invention, artificial snow of a quality suitable for skiing can be obtained without complicated processes by changing the mixture ratio, mixing method, water-absorbing method, and freezing method.

The production method of the artifical snow of the present invention comprises the following processes:
① Process for mixing water-absorbent resin (A), inorganic powder (B), surfactant (C), and water, and
② Process for freezing the mixture resulting from ①.

In the above production method, the method of mixing water-absorbent resin, inorganic powder, surfactant and water has no particular restriction concerning the mixing order and mixing conditions, but a method to first mix water-absorbent resin with inorganic powder to cover the surface of water-absorbent resin with inorganic powder, followed by mixing surfactant and water, is particularly preferable. In this case, it is desirable to employ a method allowing water-absorbent resin to absorb water after water-absorbent resin covered with inorganic powder is mixed with surfactant, or allowing water-absorbent resin covered with inorganic powder to absorb aqueous solution dissolved surfactant.

Advantages of the production method of artificial snow of the present invention lie in the fact that no complicated means such as grooming, mixing with natural snow or a refrigerant such as dry ice and the like is required; rather, by simply freezing under a low-temperature atmosphere, for example, at below 0 °C, artificial snow with good quality suitable for skiing can be easily produced.

To artificial snow of the present invention, it is possible to add antiseptics, fungicides, bactericides, oxidants, coloring agents and the like as required. These additives may be added at any optional stage of the manufacturing process.

Production Examples of water-absorbent resins, Comparative Production Examples and Examples of the present invention are illustrated below for a more detailed explanation of the invention, but the invention shall not be limited to these Examples.

Production Example 1

100 parts of "SANWET IM-5000" (crosslinking polyacrylate water-absorbent resin manufactured by Sanyo Chemical Industries, Ltd.) were placed in a 2,000-ml juicer-mixer, and 4 parts of a solution of crosslinking agent containing 0.4 parts each of sodium propionate and ethyleneglycol diglycidylether were added by drops, with stirring, and thoroughly mixed. The mixture obtained was heated at 150 °C for about 20 minutes and surface-crosslinked water-absorbent resin (1) was obtained.

Production Example 2

Surface-crosslinked water-absorbent resin (2) was obtained by the same process as Production Example 1 except 100 parts of "SANWET IM-5000" in Production Example 1 were replaced with 100 parts of "AQUARIC CA" (crosslinking polyacrylate water-absorbent resin manufactured by NIPPON SHOKUBAI CO., LTD.).

Production Example 3

Surface-crosslinked water-absorbent resin (3) was obtained by the same process as Production Example 1 except 0.4 parts of ethyleneglycol diglycidylether in Production Example 1 were replaced with 0.4 parts of glycerin.

Production Example 4

Surface-crosslinked water-absorbent resin (4) was obtained by the same process as Production Example 1 except 0.4 parts of ethyleneglycol diglycidylether in Production Example 1 were replaced with 0.4 parts of polyamide polyamine epichlorohydrin resin.

Production Example 5

Surface-crosslinked water-absorbent resin (5) was obtained by the same process as Production Example 1 except 6 parts of aqueous solution of the crosslinking agent in Production Example 1 were used instead of 4 parts.

Example 1

100 parts of water-absorbent resin (1) obtained in Production Example 1 and 1 part of ultra fine silica powder (average particle size: about 0.02 $\mu$m) were mixed in a V-type blender and thoroughly stirred to cover the surface of water-absorbent resin (1) with ultra fine silica powder. In addition, 0.1 parts of "PROFAN EX-24" (alkanolamide nonionic surfactant manufactured by Sanyo Chemical Industries, Ltd.) were dissolved into 99.9 parts of water to make a 0.1% aqueous solution. After 50 parts of this 0.1% "PROFAN EX-24" solution were absorbed into 1 part of water-absorbent resin covered with ultra fine silica powder, the obtained product was frozen in a refrigerator at -30 °C for about 2 hours and artificial snow of the present invention was obtained.

Example 2

Artificial snow of the present invention was obtained in the same manner as in Example 1 except 100 parts of water-absorbent resin (1) were replaced with 100 parts of the water-absorbent resin (2) obtained in Production Example 2.

Example 3

Artificial snow of the present invention was obtained in the same manner as Example 1 except 100 parts of water-absorbent resin (1) were replaced with 100 parts of the water-absorbent resin (3) obtained in Production Example 3.

Example 4

Artificial snow of the present invention was obtained in the same manner as Example 1 except 100 parts of water-absorbent resin (1) were replaced with 100 parts of the water-absorbent resin (4) obtained in Production Example 4.

Example 5

Artificial snow of the present invention was obtained in the same manner as Example 1 except 100 parts of water-absorbent resin (1) were replaced with 100 parts of the water-absorbent resin (5) obtained in Production Example 5.

Example 6

Artificial snow of the present invention was obtained in the same manner as Example 1 except 50 parts of 0.1% "PROFAN EX-24" were replaced with 50 parts of 0.1% "SANDET EN" (sulfate ester salt type anionic surfactant manufactured by Sanyo Chemical Industries, Ltd.).

Example 7

Artificial snow of the present invention was obtained in the same manner as in Example 1 except 50 parts of a 0.2% solution of "PROFAN EX-24" were used instead of 50 parts of a 0.1% solution.

Comparison 1

0.1 parts of "PROFAN EX-24" were dissolved into 99.9 parts of water to make the 0.1% aqueous solution. 50 parts of this aqueous solution were absorbed in 1 part of water-absorbent resin (1) obtained in Production Example 1; then, the solution was frozen in a refrigerator at -30 °C for about 2 hours, and icy artificial snow was obtained. In this way, when no inorganic powder is present, artificial snow of good quality can not be obtained.

Comparison 2

100 parts of water-absorbent resin (1) obtained in Production Example 1 and 1 part of ultra fine silica powder (average particle size: about 0.020 $\mu$m) were mixed in a V-type blending machine and thoroughly stirred to cover the surface of the water-absorbent resin (1) with ultra fine silica powder. After 1 part of the water-absorbent resin covered with the ultra fine silica powder was allowed to absorb 50 parts of water, it was frozen in a refrigerator at -30 °C for about 2 hours. Artificial snow of a lumpy form in which particles were bonded together was obtained. In this way, when no surfactant is present, artificial snow of good quality can not be obtained.

Comparison 3

One part of "PQ-polymer-BL-100" (crosslinked polyacrylate water-absorbent resin manufactured by Osaka Organic Chemical Industry, Ltd.) was allowed to absorb 50 parts of water. This water-absorbed gel was mixed with ice snow, produced by crushing ice, at a weight ratio of 1:3 and frozen in a refrigerator at -30 °C for about 2 hours to make artificial snow. Weak bonding was observed between particles of the artificial snow obtained. Grooming was necessary to prepare skiing-quality snow.

Comparison 4

One part of 2PQ-polymer-BL-1002 (crosslinked polyacrylate water-absorbent resin manufactured by Osaka Organic Chemical Industry, Ltd.) was allowed to absorb 50 parts of water. Under a -10 °C atmosphere, this water-absorbed gel was mixed with particulate dry ice at a weight ratio of 1:1 using a hand-held mixer and was frozen to make artificial snow. Weak bonding was observed between particles of the artificial snow obtained. Grooming was necessary to prepare skiing-quality snow.

Table 1 shows the performance evaluation results of artificial snow obtained in Examples 1-7 and Comparisons 1-4.

Table 1

| Example No. | Water-absorbent gel (before freezing) | | Artificial snow | |
|---|---|---|---|---|
| | Condition | Bonding between particles | Condition | Bonding between particles |
| Example | | | | |
| 1 | Dry | None | Dry | None |
| 2 | Dry | None | Dry | None |
| 3 | Dry | None | Dry | None |
| 4 | Dry | None | Dry | None |
| 5 | Dry | None | Dry | None |
| 6 | Dry | None | Dry | None |
| 7 | Dry | None | Dry | None |
| Comparison | | | | |
| 1 | Doughy | Strong bonding | Icy | Strong bonding |
| 2 | Slightly doughy | Weak bonding | Lumpy | Strong bonding |
| 3 | Dry | None | Dry | Weak bonding |
| 4 | Dry | None | Dry | Weak bonding |

Effects of the artificial snow of the present invention and the production method thereof are as follows:
① Artificial snow of the present invention and its production method require no complicated processes such as grooming (crushing the artificial snow surface into finer particles by a snow surface maintenance machine), mixing with natural snow, or mixing with a refrigerant such as dry ice and the like; rather, artificial snow of the present invention can be produced by simply freezing water-absorbed gel under a low-temperature atmosphere, for example, at 0 °C or lower.

② The conventional artificial snow produced by artificial snow blowing machines or that by crushing ice or freezing after aeration provides wet snow, granulated icy snow, or fine icy snow, respectively, and is not desirable for skiers. Artificial snow of the present invention and its production method is free from bonding between water-absorbent gel particles even after freezing, and can provide high quality snow suitable for skiers. With the effects described above, the artificial snow of the present invention and its production method is very effective for slopes of artificial ski grounds.

**Claims**

1. Artificial snow comprising water-absorbent resin, inorganic powder, surfactant and ice.

2. Artificial snow according to Claim 1, wherein water-absorbent resin has a surface which is crosslinked with crosslinking agent.

3. Artificial snow according to Claim 2, wherein the crosslinking agent is at least one compound selected from polyglycidylether compounds, polyhydric alcohols and polyamine compounds.

4. Artificial snow according to any one of Claims 1-3, wherein the water-absorbent resin is one whose surface is covered with inorganic powder.

5. Artificial snow according to any one of Claims 1-4, wherein the inorganic powder has an average particle size of 0.0001 to 1 $\mu$m.

6. Artificial snow according to any one of Claims 1-5, wherein the inorganic powder is ultra fine silica powder.

7. Artificial snow according to any one of Claims 1-6, wherein the amount of inorganic powder is in the range of 0.05-3 wt% based on the weight of the water-absorbent resin.

8. Artificial snow according to any one of Claims 1-7, wherein the surfactant is nonionic surfactant.

9. A production method for making artificial snow comprising a process for mixing water-absorbent resin, inorganic powder, surfactant, and water; and a process for freezing the resulting mixture.

10. Use of the artificial snow according to any one of Claims 1 to 8 for covering the slopes of ski grounds.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | DATABASE WPI<br>Week 8848,<br>Derwent Publications Ltd., London, GB;<br>AN 88-340863<br>& JP-A-63 251 502 (NISSHOIWAI) 19 October 1988<br>* abstract * | 1-9 | C09K3/24<br>F25C3/04 |
| X | WO-A-86 02936 (BUCCERI)<br>* abstract; claims 1-4,18 * | 1-10 | |
| Y | PATENT ABSTRACTS OF JAPAN<br>(C-364)7 August 1986<br>& JP-A-61 062 533 (MITSUI) 31 March 1986<br>* abstract * | 1-9 | |
| Y | PATENT ABSTRACTS OF JAPAN<br>(M-1198)9 January 1992<br>& JP-A-32 030 070 (MIURA DORUFUINZU) 14 October 1991<br>* abstract * | 1-9 | |
| | | | TECHNICAL FIELDS SEARCHED (Int.Cl.5) |
| A,D | EP-A-0 440 257 (MASAHISA)<br>* the whole document * | 1-10 | C09K<br>F25C |
| A,D | FR-A-2 305 452 (SANYO CHEMICAL INDUSTRIES)<br>* the whole document * | 1-3 | |

The present search report has been drawn up for all claims

| Place of search | Date of completion of the search | Examiner |
|---|---|---|
| THE HAGUE | 12 November 1993 | NICOLAS, H |

EPO FORM 1503 03.82 (P04C01)